# EUROPÄISCHE PATENTSCHRIFT

(11) **EP 3 028 805 B1**
(45) Veröffentlichungstag und Bekanntmachung des Hinweises auf die Patenterteilung: **30.01.2019**
(21) Anmeldenummer: 15198093.5
(22) Anmeldetag: 04.12.2015
(51) Int. Cl.: B23Q 1/00

(54) **SPANNMODUL**
CLAMPING MODULE
MODULE DE SERRAGE

(30) Priorität: 05.12.2014 DE 102014225076
(43) Veröffentlichungstag der Anmeldung: 08.06.2016
(73) Patentinhaber: Schunk GmbH & Co. KG Spann- und Greiftechnik, 74348 Lauffen am Neckar (DE)
(72) Erfinder: SCHRÄDER, Philipp, 88512 Mengen (DE); WÄSCHER, Tobias, 88356 Ostrach (DE)
(74) Vertreter: DREISS Patentanwälte PartG mbB

(56) Entgegenhaltungen:
- EP-A1- 1 707 307
- WO-A1-2004/091850

## Beschreibung

Die Erfindung betrifft ein Spannmodul, insbesondere ein Nullpunktspannmodul, zum positionsgenauen Spannen eines Spannkörpers, mit einem Spanngehäuse, das eine Spannaufnahme zum axialen Einführen eines am Spannkörper vorgesehenen Spannbolzens und über einen Antrieb betätigbare Spannmittel zum Einziehen und Verriegeln des Spannbolzens in der Spannaufnahme aufweist.

Mit derartigen Spannmodulen werden Spannkörper, bzw. am Spannkörper angeordnete Gegenstände oder Werkstücke, reproduzierbar positionsgenau gespannt. Die Spannkörper werden dabei an einem Aufspannelement, beispielsweise einer Aufspannplatte oder an einem Aufspanntisch angeordnet. Zum Spannen werden die Spannkörper mit ihren Spannbolzen in die spannkörperseitigen Spannaufnahmen eingeführt und dort verriegelt.

Zum Verriegeln kann vorzugsweise ein Pneumatik- oder Hydraulikantrieb Verwendung finden. Der Antrieb kann beispielsweise einen Druckraum begrenzenden Kolben vorsehen, wobei bei Druckbeaufschlagung des Druckraums der Kolben axial verlagert wird und wobei über ein Getriebe aufgrund der axialen Verlagerung des Kolbens die Spannmittel insbesondere ihre radiale Position ändern. Derartige Spannmodule, die Merkmale des Oberbegriffs des Anspruchs 1 aufweisen, sind beispielsweise aus der EP 1 707 307 B1 bekannt.

Beim Anordnen des Spannmoduls auf dem Aufspannelement kann der Fall auftreten, dass die Spannaufnahme nicht die geeignete Höhe aufweist, so dass Adapterplatten bzw. Zwischenmodule unterhalb des Spanngehäuses insbesondere auf dem Aufspannelement anzuordnen sind. Dies führt bei der Verwendung von Spannmodulen mit insbesondere Pneumatik- oder Hydraulikantrieben zu dem Nachteil, dass Druckleitungen vom Aufspannelement hin zum Spanngehäuse verlegt werden müssen. Diese Leitungen können dann bei einem späteren Einsatz des Spannmoduls störend sein.

Der Erfindung liegt die Aufgabe zugrunde, ein Spannmodul der eingangs genannten Art bereitzustellen, das den beschriebenen Nachteilen abhilft und das zudem einen vergleichsweise einfachen Aufbau aufweist und funktionssicher arbeitet.

Diese Aufgabe wird mit einem Spannmodul mit den Merkmalen des Anspruchs 1 gelöst. Ein solches Spannmodul zeichnet sich folglich dadurch aus, dass zwischen dem Spanngehäuse und dem Grundgehäuse mehrere Zwischenmodule mit integrierten Durchführungen zur Verbindung der Anschlüsse mit dem Antrieb axial hintereinander vorgesehen sind. Die Längsachsen der Zwischenmodule liegen dabei in der Längsachse der Spannaufnahme. Bei den Anschlüssen kann es sich insbesondere um Pneumatikanschlüsse und bei den Durchführungen um insbesondere Luftdurchführungen handeln. Durch Vorsehen von den Zwischenmodulen zwischen dem Grundgehäuse und dem Spanngehäuse kann das Spanngehäuse mit unterschiedlichen Höhen auf dem Aufspannelement angeordnet werden. Je nach Höhe des jeweiligen Zwischenmoduls und der Anzahl der zwischen dem Grundgehäuse und dem Spanngehäuse befindlichen Zwischenmodule können unterschiedliche Abstände zwischen dem Aufspannelement und der Spannaufnahme, und damit unterschiedliche Höhen des Spannmoduls, auf einfache Art und Weise realisiert werden. Zudem sind aufgrund der integrierten Durchführungen keine zusätzlichen Leitungen außerhalb des Spannmoduls erforderlich.

Das Grundgehäuse weist dabei eine Grundgehäuse-Schnittstelle und die Zwischenmodule eine untere Schnittstelle zur Verbindung mit der Grundgehäuse-Schnittstelle auf. Entsprechend weist das Spanngehäuse eine Spanngehäuseschnittstelle und das jeweilige Zwischenmodul eine obere Schnittstelle zur Verbindung mit der Spanngehäuse-Schnittstelle auf. Das jeweilige Zwischenmodul weist folglich zwei Schnittstellen auf, eine an der Oberseite, insbesondere zur Verbindung mit dem Spanngehäuse und eine an der Unterseite, insbesondere zur Verbindung mit dem Grundgehäuse.

Die untere Schnittstelle des jeweiligen Zwischenmoduls ist vorteilhafterweise der Spanngehäuseschnittstelle entsprechend ausgebildet. Ferner ist die obere Schnittstelle des jeweiligen Zwischenmoduls vorteilhafterweise der Grundgehäuseschnittstelle entsprechend ausgebildet. Dadurch wird gewährleistet, dass das Spanngehäuse auch unmittelbar, ohne Vorsehen eines Zwischenmoduls, in das Grundgehäuse eingesetzt werden kann. Ferner wird dadurch gewährleistet, dass mehrere Zwischenmodule mit entsprechenden Schnittstellen zwischen dem Grundgehäuse und dem Spanngehäuse vorgesehen sein können.

Vorteilhafterweise weist die untere Schnittstelle des jeweiligen Zwischenmoduls und die Spanngehäuse-Schnittstelle einen Anlageabschnitt und einen dazu radial zurückversetzten Einführungsabschnitt auf. Der Anlageabschnitt kann dabei vorzugsweise als Ringabschnitt ausgebildet sein; der Einführabschnitt kann vorzugsweise bolzenartig ausgebildet sein.

Die obere Schnittstelle des jeweiligen Zwischenmoduls und die Grundgehäuseschnittstelle sind vorzugsweise dazu komplementär ausgebildet und weisen einen Auflageabschnitt zur Auflage des Anlageabschnitts und eine Einführaufnahme zur Aufnahme des Einführabschnitts auf. Der Auflageabschnitt kann dabei entsprechend dem Anlageabschnitt ringartig ausgebildet sein; die Einführaufnahme kann dabei zur Aufnahme des Einführabschnitts hülsenartig ausgebildet sein.

Die in dem jeweiligen Zwischenmodul vorgesehenen Durchführungen erstrecken sich vorzugsweise in axialer Richtung durch das jeweilige Zwischenmodul zwischen dem Anlageabschnitt und dem Auflageabschnitt. Die Durchführungen münden dabei vorteilhafterweise im Anlageabschnitt und im Auflageabschnitt.

Ferner ist vorteilhaft, wenn Verriegelungselemente zur Verriegelung des Zwischenelements am Grundgehäuse und/oder am Spanngehäuse vorgesehen sind. Bei Vorsehen mehrerer Zwischenelemente können die Verriegelungselemente zur Verriegelung von benachbarten Zwischenelementen Verwendung finden.

Die Verriegelungselemente sind vorteilhafterweise als Verriegelungsbolzen ausgebildet, wobei sich ein Bolzen in radialer Richtung durch die Einführaufnahme und durch den von der Einführaufnahme aufgenommen Einführabschnitt erstrecken kann. Ein Verriegelungsbolzen dient folglich zur Verriegelung eines in die Einführaufnahme eingeführten Einführabschnitts.

Der Verriegelungsbolzen kann dabei insbesondere konisch derart ausgebildet sein, dass beim Einführen des Verriegelungsbolzens ein axiales Einziehen des Einführabschnitts in die Einführaufnahme erfolgt. Dazu ist insbesondere das freie Ende des Verriegelungsbolzens konisch ausgebildet. Zudem ist dabei vorzugsweise eine mit dem freien Ende des Verriegelungsbolzens an der Einführaufnahme vorgesehen konische Gegenfläche vorgesehen, die mit dem Verriegelungsbolzen zusammenwirkt.

Ferner ist vorteilhaft, wenn der Verriegelungsbolzen Gewindeabschnitte zu dessen Sicherung aufweist oder wenn der Verriegelungsbolzen mittels Gewindebolzen in seiner Lage gesichert ist. Der Verriegelungsbolzen kann folglich als solcher am jeweiligen Bauteil über ein Gewinde angeschraubt sein. Denkbar ist auch, dass der Verriegelungsbolzen in eine Bolzenaufnahme eingeführt wird und mittels einer Schraube, beispielsweise einer Madenschraube, in seiner Lage gesichert wird.

Da mehrere Zwischenmodule hintereinander angeordnet sind, erstrecken sich die Durchführungen der einzelnen Zwischenmodule vorzugsweise entlang einer geraden Linie parallel zur Mittellängsachse des Moduls. Um eine sichere, insbesondere luftdichte Abdichtung zwischen den Modulen und dem Spanngehäuse und dem Grundgehäuse zu erreichen, ist vorteilhaft, wenn zwischen den einzelnen Bauteilen Dichtungstüllen vorgesehen sind.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
Figur 1 ein erfindungsgemäßes Spannmodul in demontierter Darstellung von schräg oben;
Figur 2 die Darstellung gemäß Figur 1 von schräg unten;
Figur 3 die Draufsicht auf ein montiertes Spannmodul gemäß Figur 1;
Figur 4 die Seitenansicht des Spannmoduls gemäß Figur 3;
Figur 5 einen Schnitt durch das Spannmodul gemäß Figur 3 entlang der Linie V-V bei gespanntem Spannbolzen;
Figur 6 einen Schnitt durch das Spannmodul gemäß Figur 3 entlang der Linie VI in teilmontiertem Zustand; und
Figur 7 die Ansicht gemäß Figur 6 mit teilweisen Freischnitten bei nicht gespanntem Spannbolzen.

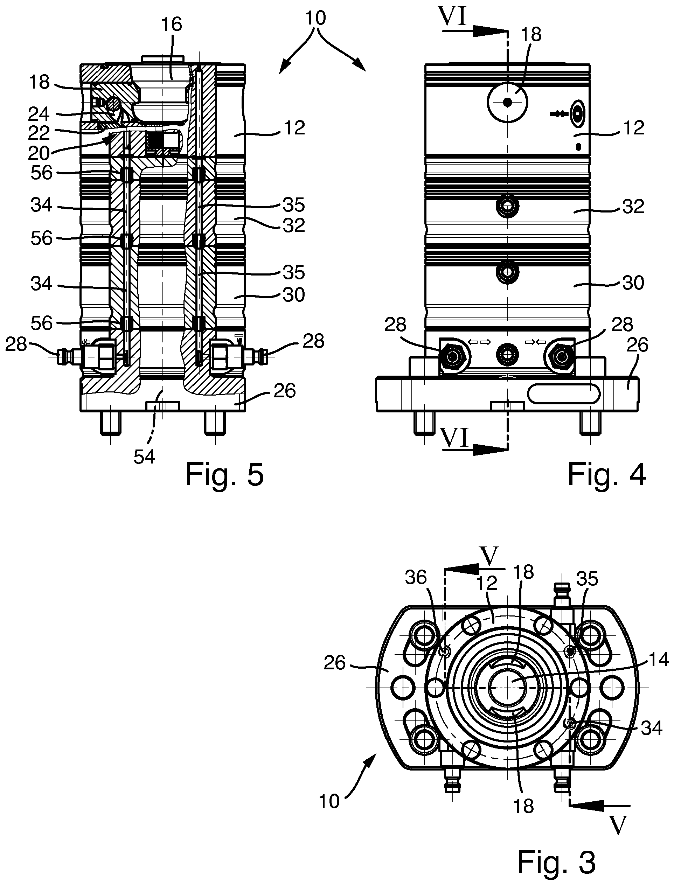

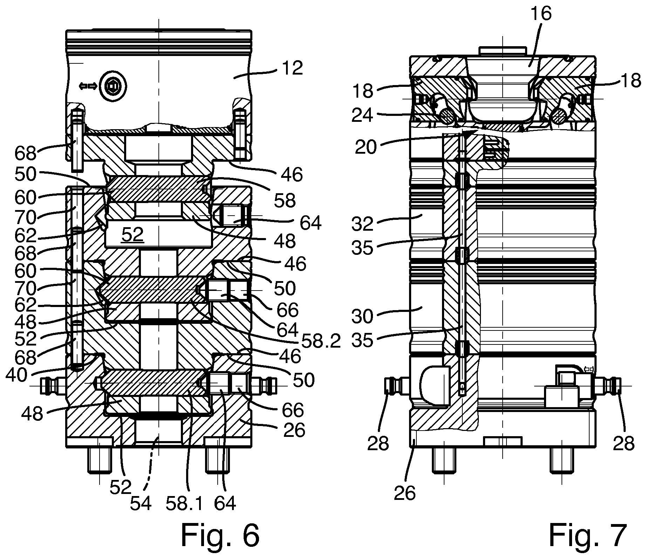

In den Figuren ist ein Spannmodul 10 zum positionsgenauen Spannen eines nicht in den Figuren dargestellten Spannkörpers gezeigt. Das Spannmodul 10 umfasst ein Spanngehäuse 12, das eine Spannaufnahme 14 zum axialen Einführen eines am Spannkörper vorgesehenen Spannbolzen 16, der in Figur 5 und 7 dargestellt ist, aufweist. Wie aus den Schnitten gemäß Figur 5 und 7 deutlich wird, sind im Spannkörper 12 aufeinander zu und voneinander weg bewegbare Spannmittel 18 in Form von Spannschiebern untergebracht. Die Spannmittel 18 werden über einen nicht näher gezeigten Pneumatikantrieb 20 betätigt. Der Pneumatikantrieb entspricht im Wesentlichen dem aus der EP 1 707 307 B1 vorbekannten Antrieb mit einem Kolben 22 und einen nicht in den Figuren dargestellten Druckraum. Zwischen dem Kolben 22 und den Spannmitteln 18 sind, entsprechend der EP 1 707 307 B1, Schrägführungen 24 vorgesehen.

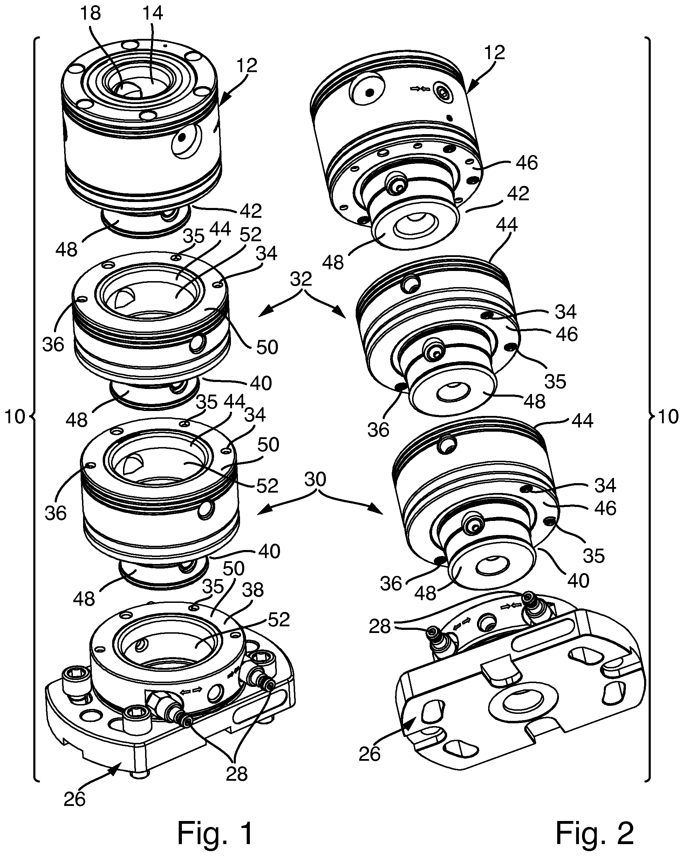

Wie insbesondere aus dem Figuren 1 und 2 deutlich wird, weist das Spannmodul 10 ein Grundgehäuse 26 auf, das auf einem nicht dargestellten Aufspannelement, wie beispielsweise einem Aufspanntisch oder einer Aufspannplatte, befestigt werden kann. Das Grundgehäuse 26 weist zwei Pneumatikanschlüsse 28 auf. Ferner sind zwischen dem Grundgehäuse 26 und dem Spanngehäuse 12 insgesamt zwei Zwischenmodule 30, 32 vorgesehen.

Die Zwischenmodule 30, 32 weisen, wie aus Figuren 5 und 7 deutlich wird, integrierte Luftdurchführungen 34, 35, 36 auf, die als parallel zur Mittellängsachse 54 verlaufende Axialbohrungen ausgebildet sind. Über die Luftdurchführungen 34 und 36 können letztlich die Anschlüsse 28 am Grundgehäuse mit dem Pneumatikantrieb 20, der im Spanngehäuse 12 untergebracht ist, verbunden werden. Die Luftdurchführung 35 dient dazu, das Werkstück über eine Anwesenheitskontrolle zu detektieren.

Zur Anordnung des Zwischenmoduls 30 am Grundgehäuse 26 weist das Grundgehäuse 26 eine Grundgehäuse-Schnittstelle 38 auf. Und das Zwischenmodul 30 weist eine zu der Grundgehäuse-Schnittstelle 38 komplementär ausgebildete untere Schnittstelle 40 auf. Die untere Schnittstelle 40 des Zwischenmoduls 30 entspricht dabei der unteren Schnittstelle 40 des Zwischenmoduls 32 und einer am Spanngehäuse 12 vorgesehenen Spanngehäuse-Schnittstelle 42.

Die Zwischenmodule 30 und 32 weisen an ihrer Oberseite jeweils eine der Grundgehäuse-Schnittstelle 38 entsprechende obere Schnittstelle 44 auf. Dadurch, dass die Spannkörper-Schnittstelle 42 entsprechend den unteren Schnittstellen 40 ausgebildet ist, kann das Spanngehäuse 12 auch unmittelbar, also ohne Zwischenschaltung von Zwischenmodulen 30, 32, am Grundgehäuse 26 angeordnet werden.

Die Spanngehäuse-Schnittstelle 42 sowie die unteren Schnittstellen 40 weisen jeweils einen Anlageabschnitt 46 und einen radial zurückversetzten Einführabschnitt 48 auf. Entsprechend weisen die Grundgehäuse-Schnittstelle 38 sowie die oberen Schnittstellen 44 jeweils einen Auflageabschnitt 50 zur Auflage des jeweiligen Anlageabschnitts 46 sowie eine Einführaufnahme 52 zur Aufnahme des jeweiligen Einführabschnitts 48 auf. Der jeweilige Anlageabschnitt 46 sowie der jeweilige Auflageabschnitt 50 ist dabei ringartig ausgebildet.

Wie aus den Figuren 1 und 2 deutlich wird, münden die Luftdurchführungen 34, 35, 36 jeweils im Anlageabschnitt 46 bzw. Auflageabschnitt 50 des jeweiligen Zwischenmoduls 30, 32.

Wie insbesondere aus dem Schnitt gemäß Figur 5 deutlich wird, verlaufen die Luftdurchführungen 34 und 36 parallel zur Mittellängsachse 54 axial durch die Zwischenmodule 30 und 32. Zur Abdichtung an den Schnittstellen zwischen den Zwischenmodulen 30, 32 und dem Grundgehäuse 26 bzw. dem Spanngehäuse 12 sind zwischen den einzelnen Bauteilen Dichtungstüllen 56 vorgesehen.

Wie aus Figur 6 deutlich wird, sind zur Anordnung der Zwischenmodule 30, 32 am Grundgehäuse 26 sowie zur Anordnung des Spanngehäuses 12 am Zwischenmodul 30 Verriegelungselemente in Form von Verriegelungsbolzen 58 vorgesehen. In Figur 6 sind die beiden Zwischenmodule 30, 32 mittels den zugehörigen Verriegelungsbolzen 58.1 und 58.2 bereits am Grundgehäuse 26 gesichert. Dazu sind die jeweiligen Einführabschnitte 48 in die jeweils zugehörige Einführaufnahme 52 eingeführt. Die jeweiligen Auflageabschnitte 50 liegen dabei an den jeweiligen Anlageabschnitten 46 auf. Wie aus Figur 6 deutlich wird, erstrecken sich die Verriegelungsbolzen 58.1 und 58.2 quer zur Mittellängsachse 54 und durchgreifen die jeweiligen Einführabschnitte 48.

Die einzelnen Verriegelungsbolzen 58 weisen an ihrem freien Ende einen Konusabschnitt 60 auf, der mit einem einführaufnahmeseitigen Gegenkonus 62 derart zusammenwirkt, dass beim Einführen der Verriegelungsbolzen 58 der jeweilige Einführabschnitt 48 in die jeweilige Einführaufnahme 42 gezogen wird. Zum Sichern der Verriegelungsbolzen sind Madenschrauben 64 vorgesehen, die ein Außengewinde aufweisen und in eine Gewindebohrung 66, die an den Zwischenmodulen 30, 32 bzw. am Grundkörper 26 vorgesehen sind, einschraubbar sind.

Beim Fügen der einzelnen Bauteile wird, wie in Figur 6 für den Spannkörper 12 gezeigt, das jeweilige Bauteil mit seinem Einführabschnitt 48 in jeweils zugehörige Einführaufnahme 52 eingesetzt. Das jeweilige Verriegelungselement 58 wird dann, wie ebenfalls aus Figur 6 deutlich zu erkennen ist, in den jeweiligen Einführabschnitt 48 eingeschoben. Bei Erreichen der Endlage wird die jeweilige Madenschrauben 64 derart zugestellt, dass der Verriegelungsbolzen 58 mit seinem Konusabschnitt 60 in den Gegenkonus 62 eintaucht und den jeweiligen Einführabschnitt 48 in die jeweilige Einführaufnahme 52 einzieht. Die Verlagerung des Verriegelungsbolzens 58 erfolgt durch Eindrehen der jeweiligen Madenschraube 64, so dass diese mit dem dem Konusabschnitt 60 abgewandten freien Ende des Verriegelungsbolzens 58 in Kontakt kommt und diesen entlang seiner Längsachse axial verschiebt.

Zur Verdrehsicherung der einzelnen Bauteile gegeneinander sind, wie ebenfalls aus Figur 6 deutlich wird, zwischen den einzelnen Bauteilen Stifte 68 vorgesehen. Die Stifte 68 sind in dafür vorgesehenen Stiftausnehmungen 70 untergebracht.

Die erfindungsgemäßen Spannmodule 10 haben folglich den Vorteil, dass sie unter Verwendung einer unterschiedlichen Anzahl von Zwischenmodulen 30, 32 unterschiedliche Bauhöhen aufweisen können. Durch die integralen Luftführungen 34, 35, 36 zur Betätigung des Pneumatikantriebs 20 und der Anwesenheitskontrolle entfällt zudem eine Verschlauchung, welche sich im Betrieb des Spannmoduls ungünstig auswirken kann.

## Patentansprüche

1. Spannmodul (10), insbesondere Nullpunktspannmodul, zum positionsgenauen Spannen eines Spannkörpers,
mit einem Spanngehäuse (12), das eine Spannaufnahme (14) zum axialen Einführen eines am Spannkörper (12) vorgesehenen Spannbolzens (16) und über einen Antrieb (20) betätigbare Spannmittel (18) zum Einziehen und Verriegeln des Spannbolzens (16) in der Spannaufnahme (14) aufweist, **wobei** ein an einem Aufspannelement befestigbares Grundgehäuse (26) mit mindestens einem Anschluss (28) vorgesehen ist, **dadurch gekennzeichnet, dass** zwischen dem Spanngehäuse (12) und dem Grundgehäuse (26) mehrere Zwischenmodule (30, 32) mit integrierten Durchführungen (34, 35, 36) zur Verbindung des mindestens einen Anschlusses (28) mit dem Antrieb (20) axial hintereinander vorgesehen sind..

2. Spannmodul (10) nach Anspruch 1, **dadurch gekennzeichnet, dass** das Grundgehäuse (26) eine Grundgehäuse-Schnittstelle (38) und dass das jeweilige Zwischenmodul (30, 32) eine untere Schnittstelle (40) zur Verbindung mit der Grundgehäuse-Schnittstelle (38) aufweist.

3. Spannmodul (10) nach Anspruch 1 oder 2, **dadurch gekennzeichnet, dass** das Spanngehäuse (12) eine Spanngehäuse-Schnittstelle (42) und dass das jeweilige Zwischenmodul (30, 32) eine obere Schnittstelle (44) zur Verbindung mit der Spanngehäuse-Schnittstelle (42) aufweist.

4. Spannmodul (10) nach Anspruch 2 oder 3, **dadurch gekennzeichnet, dass** die untere Schnittstelle (40) des jeweiligen Zwischenmoduls (30, 32) der Spanngehäuse-Schnittstelle (42) entsprechend ausgebildet ist und/oder dass die obere Schnittstelle (44) des jeweiligen Zwischenmoduls (30, 32) der Grundgehäuse-Schnittstelle (38) entsprechend ausgebildet ist.

5. Spannmodul (10) nach Anspruch 4, **dadurch gekennzeichnet, dass** die untere Schnittstelle (40) des jeweiligen Zwischenmoduls (30, 32) und die Spanngehäuse-Schnittstelle (42) einen Anlageabschnitt (46) und einen radial zurückversetzten Einführabschnitt (48) aufweist.

6. Spannmodul (10) nach Anspruch 5, **dadurch gekennzeichnet, dass** die obere Schnittstelle (44) des jeweiligen Zwischenmoduls (30, 32) und die Grundgehäuse-Schnittstelle (38) einen Auflageabschnitt (50) zur Auflage des Anlageabschnitts (46) und eine Einführaufnahme (52) zur Aufnahme des Einführabschnitts (48) aufweist.

7. Spannmodul (10) nach Anspruch 5 und 6, **dadurch gekennzeichnet, dass** sich die Durchführungen (34, 35, 36) durch das jeweilige Zwischenmodul (30, 32) in axialer Richtung zwischen dem Anlageabschnitt (46) und dem Auflageabschnitt (50) erstrecken.

8. Spannmodul (10) nach einem der vorhergehenden Ansprüche, **dadurch gekennzeichnet, dass** Verriegelungselemente (58) zur Verriegelung des Zwischenelements (30, 32) am Grundgehäuse (26) und/oder am Spanngehäuses (12) vorgesehen sind.

9. Spannmodul (10) nach Anspruch 8, **dadurch gekennzeichnet, dass** die Verriegelungselemente (58) als Verriegelungsbolzen ausgebildet sind, die sich in radialer Richtung durch die Einführaufnahme (52) und durch den von der Einführaufnahme (52) aufgenommenen Einführabschnitt (48) erstrecken.

10. Spannmodul (10) nach Anspruch 9, **dadurch gekennzeichnet, dass** die Verriegelungsbolzen (38) konisch derart ausgebildet sind, dass beim Einführen der Verriegelungsbolzen ein axiales Einziehen des Einführabschnitts (48) in die Einführaufnahme (52) erfolgt.

11. Spannmodul (10) nach Anspruch 8 oder 9, **dadurch gekennzeichnet, dass** die Verriegelungsbolzen (58) Gewindeabschnitte zu deren Sicherung aufweisen oder Mittels Gewindebolzen (64) gesichert angeordnet sind.

## Claims

1. Clamping module (10), in particular a zero-point clamping module, for clamping a clamping body with positional accuracy, comprising a clamp housing (12) that has a clamp receptacle (14) for axially inserting a clamp bolt (16) provided on the clamping body (12) and clamping means (18) that can be actuated by means of a drive (20) in order to pull the clamp bolt (16) in and lock said bolt in the clamp receptacle (14), a base housing (26) that can be fastened to a mounting element being provided with at least one connection (28), **characterized in that** a plurality of intermediate modules (30, 32) having integrated passages (34, 35, 36) for connecting the at least one connection (28) to the drive (20) are provided axially one behind the other between the clamp housing (12) and the base housing (26).

2. Clamping module (10) according to claim 1, **characterized in that** the base housing (26) has a base housing interface (38) and **in that** the relevant intermediate module (30, 32) has a lower interface (40) for connecting to the base housing interface (38).

3. Clamping module (10) according to claim 1 or claim 2, **characterized in that** the clamp housing (12) has a clamp housing interface (42) and **in that** the relevant intermediate module (30, 32) has an upper interface (44) for connecting to the clamp housing interface (42).

4. Clamping module (10) according to claim 2 or claim 3, **characterized in that** the lower interface (40) of the relevant intermediate module (30, 32) corresponds to the clamp housing interface (42) and/or **in that** the upper interface (44) of the relevant intermediate module (30, 32) corresponds to the base housing interface (38).

5. Clamping module (10) according to claim 4, **characterized in that** the lower interface (40) of the relevant intermediate module (30, 32) and the clamp housing interface (42) have a contact portion (46) and a radially recessed insertion portion (48).

6. Clamping module (10) according to claim 5, **characterized in that** the upper interface (44) of the relevant intermediate module (30, 32) and the base housing interface (38) have a support portion (50) for supporting the contact portion (46) and an insertion receptacle (52) for receiving the insertion portion (48).

7. Clamping module (10) according to claim 5 and claim 6, **characterized in that** the passages (34, 35, 36) extend through the relevant intermediate module (30, 32) in the axial direction between the contact portion (46) and the support portion (50).

8. Clamping module (10) according to any of the preceding claims, **characterized in that** locking elements (58) are provided for locking the intermediate element (30, 32) on the base housing (26) and/or on the clamp housing (12).

9. Clamping module (10) according to claim 8, **characterized in that** the locking elements (58) are locking bolts which extend in the radial direction through the insertion receptacle (52) and through the insertion portion (48) received by the insertion receptacle (52).

10. Clamping module (10) according to claim 9, **characterized in that** the locking bolts (38) are conical such that, when inserting the locking bolts, the insertion portion (48) is axially pulled into the insertion receptacle (52).

11. Clamping module (10) according to claim 8 or claim 9, **characterized in that** the locking bolts (58) have threaded portions to secure them or are arranged so as to be secured by means of threaded bolts (64).

## Revendications

1. Module de serrage (10), en particulier module de serrage au point zéro, pour le serrage dans une position précise d'un corps à serrer, comprenant un boîtier de serrage (12), qui présente un logement de serrage (14) pour l'introduction axiale d'un boulon de serrage (16) prévu sur le corps à serrer (12) et des moyens de serrage (18) pouvant être actionnés par l'intermédiaire d'un entraînement (20) pour l'insertion et le verrouillage du boulon de serrage (16) dans le logement de serrage (14), dans lequel un boîtier de base (26) pouvant être fixé sur un élément de fixation est pourvu d'au moins un raccord (28), **caractérisé en ce que** plusieurs modules intermédiaires (30, 32) pourvus de passages (34, 35, 36) intégrés pour la liaison du au moins un raccord (28) à l'entraînement (20) sont prévus axialement les uns derrière les autres entre le boîtier de serrage (12) et le boîtier de base (26).

2. Module de serrage (10) selon la revendication 1, **caractérisé en ce que** le boîtier de base (26) présente une interface de boîtier de base (38) et **en ce que** le module intermédiaire (30, 32) respectif présente une interface inférieure (40) destinée à être reliée à l'interface de boîtier de base (38).

3. Module de serrage (10) selon la revendication 1 ou 2, **caractérisé en ce que** le boîtier de serrage (12) présente une interface de boîtier de serrage (42) et **en ce que** le module intermédiaire (30, 32) respectif présente une interface supérieure (44) destinée à être reliée à l'interface de boîtier de serrage (42).

4. Module de serrage (10) selon la revendication 2 ou 3, **caractérisé en ce que** l'interface inférieure (40) du module intermédiaire (30, 32) respectif est conçue de manière à correspondre à l'interface de boîtier de serrage (42) et/ou **en ce que** l'interface supérieure (44) du module intermédiaire (30, 32) respectif est conçue de manière à correspondre à l'interface de boîtier de base (38).

5. Module de serrage (10) selon la revendication 4, **caractérisé en ce que** l'interface inférieure (40) du module intermédiaire (30, 32) respectif et l'interface de boîtier de serrage (42) présentent une partie d'appui (46) et une partie d'introduction (48) radialement en retrait.

6. Module de serrage (10) selon la revendication 5, **caractérisé en ce que** l'interface supérieure (44) du module intermédiaire (30, 32) respectif et l'interface de boîtier de base (38) présentent une partie de support (50) pour le support de la partie d'appui (46) et un logement d'introduction (52) pour le logement de la partie d'introduction (48).

7. Module de serrage (10) selon les revendications 5 et 6, **caractérisé en ce que** les passages (34, 35, 36) s'étendent à travers le module intermédiaire (30, 32) respectif dans la direction axiale entre la partie d'appui (46) et la partie de support (50).

8. Module de serrage (10) selon l'une quelconque des revendications précédentes, **caractérisé en ce que** des éléments de verrouillage (58) sont destinés au verrouillage de l'élément intermédiaire (30, 32) sur le boîtier de base (26) et/ou sur le boîtier de serrage (12).

9. Module de serrage (10) selon la revendication 8, **caractérisé en ce que** les éléments de verrouillage (58) sont réalisés sous la forme de boulons de verrouillage, qui s'étendent dans la direction radiale à travers le logement d'introduction (52) et à travers la partie d'introduction (48) logée par le logement d'introduction (52).

10. Module de serrage (10) selon la revendication 9, **caractérisé en ce que** les boulons de verrouillage (38) sont réalisés de manière conique, de telle sorte que, lors de l'introduction des boulons de verrouillage, il s'effectue une insertion axiale de la partie d'introduction (48) dans le logement d'introduction (52).

11. Module de serrage (10) selon la revendication 8 ou 9, **caractérisé en ce que** les boulons de verrouillage (58) présentent des parties filetées pour le blocage de ceux-ci ou sont agencés de manière à être bloqués au moyen de boulons filetés (64).
